# FASCICULE DE BREVET EUROPEEN

(11) **EP 1 036 723 B1**
(45) Date de publication et mention de la délivrance du brevet: **24.08.2005**
(21) Numéro de dépôt: 00200901.7
(22) Date de dépôt: 13.03.2000
(51) Int. Cl.: B62B 3/10, B62B 5/06

(54) **Dispositifs destinés à être montés sur des chariot portant un seau et un appareil d'essorage**
Vorrichtung zum Montieren auf mit Eimer und Auswringvorrichtung vorgesehenem Wagen
Device adapted to be mounted on a trolley comprising buckets and a wringing mechanism

(30) Priorité: 15.03.1999 IT PD990046
(43) Date de publication de la demande: 20.09.2000
(73) Titulaire: A.Z. INTERNATIONAL S.A., 2130 Luxembourg (LU)
(72) Inventeur:
(74) Mandataire: Waxweiler, Jean

(56) Documents cités:
- EP-A- 0 121 075
- WO-A-91/01676
- US-A- 4 493 492

## Description

La présente invention concerne des chariots de nettoyage destinés à porter un seau et un appareil d'essorage, pourvus d'un manche de guidage fixe.

Il existe actuellement sur le marché une grande variété de chariots de nettoyage et parmi ceux-ci, ceux qui comportent un plan porteur d'un seau et un support d'un appareil d'essorage. Parmi ces derniers chariots, il existe des chariots portant un appareil d'essorage et comportant un seul plan porteur de seau et un manche de guidage en forme de cadre solidaire de la structure du chariot, en étant incliné d'une manière appropriée. Ces chariots pourvus d'un seul plan porte-seau peuvent comporter, dans leur partie opposée au plan porte-seau et dans la zone située en dessous du manche de guidage en forme de cadre incliné, une structure additionnelle destinée à un plan ou à un récipient pour recueillir des matières ou des objets utilisés pour le nettoyage.

Très souvent, les manches de ces chariots sont pourvus de tétons ou de crochets pour suspendre des éléments utilisés pour le nettoyage. Si ces éléments qui sont appliqués sur le manche, font obstacle à la manoeuvrabilité du seau ou de l'appareil d'essorage, ils peuvent rester en place uniquement pendant le transport et l'inactivité du chariot alors qu'ils doivent être enlevés pour permettre les opérations intervenant pour la manoeuvre du seau et de l'appareil d'essorage.

Il est connu que les opérateurs affectés à des opérations de nettoyage exigent de disposer de chariots portant un appareil d'essorage qui soit pourvu de rayons, de plateaux, de bacs, de crochets, sans que ceux-ci augmentent la largeur d'encombrement du chariot, et ce afin de pouvoir disposer d'autres matières et d'autres accessoires pour des opérations de nettoyage qui doivent être effectuées en des lieux qui doivent être atteints par le chariot lui-même. Les constructeurs ont cherché à satisfaire aux exigences des opérateurs en équipant d'une manière appropriée le chariot lui-même sans toutefois résoudre le problème apparaissant pendant les opérations de manoeuvre du seau et de l'appareil d'essorage, du fait que les éléments ajoutés doivent être enlevés momentanément.

En outre, les éléments ajoutés au chariot tels que fabriqués actuellement par les constructeurs se traduisent par un obstacle pour le transport du chariot lui-même.

L'avantage de pouvoir disposer d'éléments et de matières ajoutés au chariot de base portant un seau et un appareil d'essorage est refusé par les opérateurs qui sont affrontés à un manque de commodité des opérations d'essorage, du fait qu'ils sont obligés de démonter puis de remonter certains éléments appliqués sur le chariot lui-même.

Un chariot de nettoyage de ce type est décrit dans le document US-A-4 493 492.

Ce document US-A-4 493 492 décrit un chariot de nettoyage, en particulier un chariot pour porter un seau et un appareil d'essorage, selon le préambule de la revendication 1.

La présente invention a pour le but de pallier aux inconvenients des chariots de nettoyage connus actuellement tels que mentionnés ci-dessus. En particulier, le but de la présente invention est de résoudre le problème de l'équipement d'un chariot avec des éléments ajoutés qui ne doivent pas être enlevés lorsque l'on doit effectuer des opérations d'essorage et qui ne font pas obstacle au transport du chariot lui-même.

Ces buts ainsi que d'autres sont atteints, suivant l'invention, par un chariot de nettoyage destiné à porter un seau et un appareil d'essorage, ayant les caractéristiques de la partie caractérisante de la revendication 1.

Les dispositifs pour équiper un chariot, pourvu d'un appareil d'essorage, d'un seau et d'un manche de guidage en forme de cadre, d'éléments additionnels concernent principalement les branches inclinées du cadre du manche, ils laissent disponible l'espace nécessaire pour les opérations d'essorage et la zone d'engagement de la traverse horizontale du cadre qui relie les branches descendantes et inclinées de celui-ci et ils n'interfèrent pas avec le volume de la structure qui se trouve opposée au plan portant le seau et ils n'interfèrent pas non plus contre les jambes qui transportent le chariot.

L'un des dispositifs précités est constitué d'une structure, avantageusement monobloc, qui se termine, à la partie supérieure, avec des plans d'appui ou des plateaux ou des bacs ou des récipients de formes diverses, et qui est pourvue, à sa partie inférieure, de trois prolongements dont deux viennent en appui sur une branche inclinée du manche de guidage en forme de cadre et dont le troisième vient en appui sur une position intermédiaire de la traverse horizontale qui constitue la poignée du manche de guidage en forme de cadre.

Le dispositif précité qui est maintenu à distance au-dessus de l'une des deux branches du manche de guidage en forme de cadre, s'étend à l'intérieur vers l'autre branche en laissant un espace suffisant pour pouvoir manoeuvrer la poignée du levier de l'appareil d'essorage.

Les parties extrêmes du dispositif qui sont en appui sur le manche de guidage en forme de cadre, sont configurées de manière à présenter le même profil que celui de la branche inclinée et de la traverse horizontale supérieure du manche. Leur fixation peut être assurée au moyen de vis ou encore de tétons ou ergots qui pénètrent dans des trous formés préalablement dans l'une des parties qui viennent en appui, et d'une fente correspondante en forme de L.

L'application des parties terminales du dispositif sur le manche de guidage en forme de cadre du chariot et leur séparation peuvent être effectuées facilement en insérant ou en extrayant les tétons éventuels ou en faisant coulisser, dans un sens ou dans l'autre, les éléments en prise constitués par les tétons à tête élargie et les fentes correspondantes en forme de L.

Tous les prolongements présents à la partie inférieure du dispositif ou seulement certains d'entre eux peuvent être réalisés en deux parties qui, à l'endroit de leur jonction, ont deux parties extrêmes respectivement femelle et mâle.

Le second des dispositifs précités est constitué par une structure en porte-à-faux qui se trouve en dessous du manche de guidage en forme de cadre du chariot et qui comprend un châssis ouvert sensiblement en forme de C, disposé suivant un plan légèrement incliné vers l'extérieur. Le côté principal de ce châssis ouvert en forme de C qui est proche des branches inclinées du manche du chariot, est pourvu de deux bras incurvés, d'une longueur appropriée, qui le soutiennent par-dessous et qui se terminent par deux attaches destinées à appliquer sur les branches inclinées du manche de guidage en forme de cadre du chariot.

Les attaches extrêmes d'appui du châssis ouvert en forme de C sont configurées de manière à présenter le même profil que celui des branches inclinées du manche de guidage en forme de cadre du chariot et leur fixation peut être réalisée de diverses façons au moyen de vis ou encore de dispositifs d'accouplement du type à tétons à tête élargie et à fentes correspondantes en forme de L.

Le châssis ouvert en forme de C permet de soutenir des petits sacs à ordures et il est relié, à l'endroit de ses extrémités libres, au moyen de charnières, à des éléments ayant une section transversale en forme de U inversé et qui, en venant s'appliquer par-dessus le châssis ouvert en forme de C, assurent le maintien d'un sac à ordures, en constituant une sorte de pince.

Le châssis du second dispositif ajouté est avantageusement réalisé en forme de C parce que l'absence de son côté antérieur facilite l'enlèvement du sac à ordures une fois celui-ci rempli. La distance entre le châssis ouvert en forme de C et les branches inclinées du manche du chariot permet la libre course du manche de l'appareil d'essorage et son extension réduite vers l'extérieur, avec un sac d'ordures plein, permet un libre mouvement des jambes de la personne qui assure le transport du chariot. Le manche de guidage en forme de cadre du chariot peut être équipé, en plus des deux dispositifs décrits précédemment, d'autres éléments particuliers additionnels tels que des crochets ou des attaches pour maintenir des manches de balais ou des articles similaires.

Les dispositifs décrits précédemment peuvent être appliqués au manche de guidage en forme de cadre du chariot soit tous les deux en même temps soit individuellement.

On décrira ci-après, à titre d'exemple non limitatif, une forme d'exécution de la présente invention, en référence aux dessins annexés.

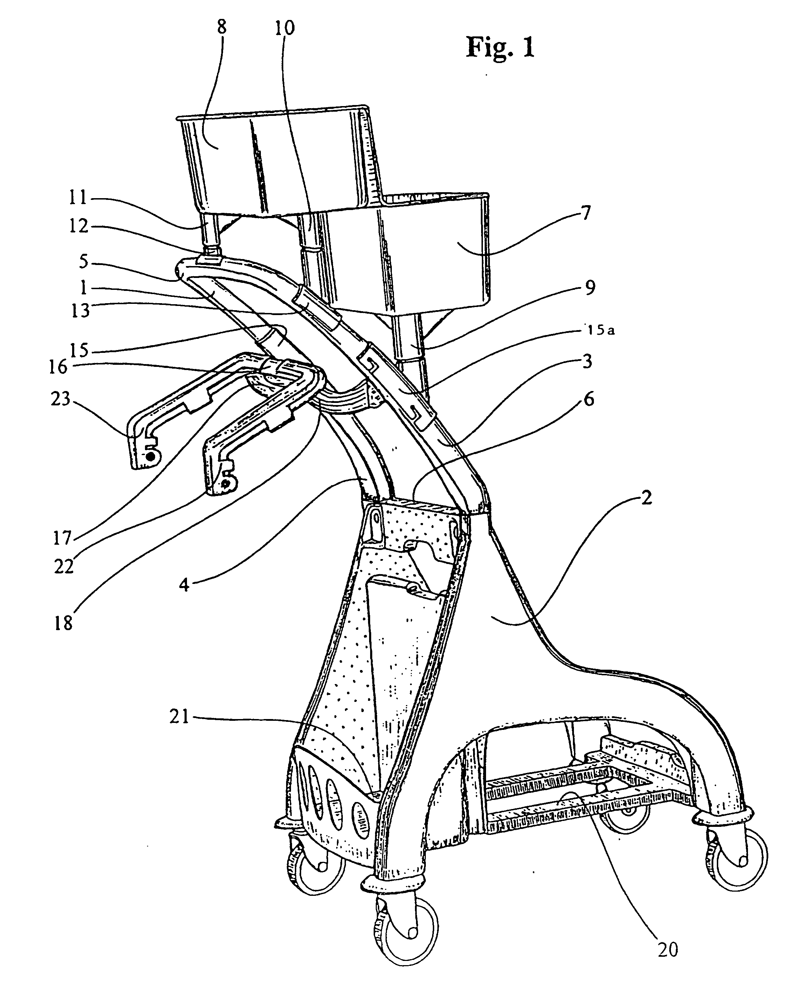

La figure 1 est une vue en perspective, prise de l'arrière et du côté droit, d'un chariot de nettoyage pourvu d'un manche de guidage en forme de cadre sur lesquels sont montés les dispositifs suivant la présente invention, à savoir une structure monobloc comprenant deux bacs et une structure comprenant un châssis porte-sac à ordures maintenu en porte-à-faux.

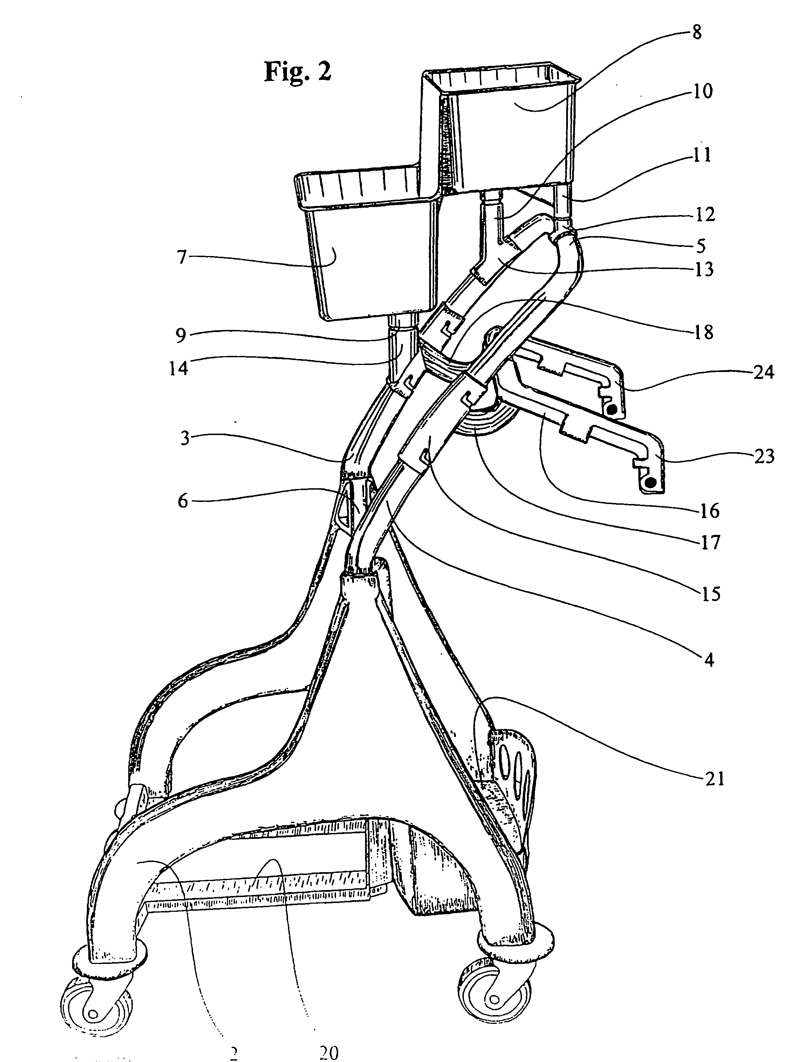

La figure 2 est une vue en perspective correspondante du chariot représenté sur la figure 1 mais prise du côté gauche et du haut.

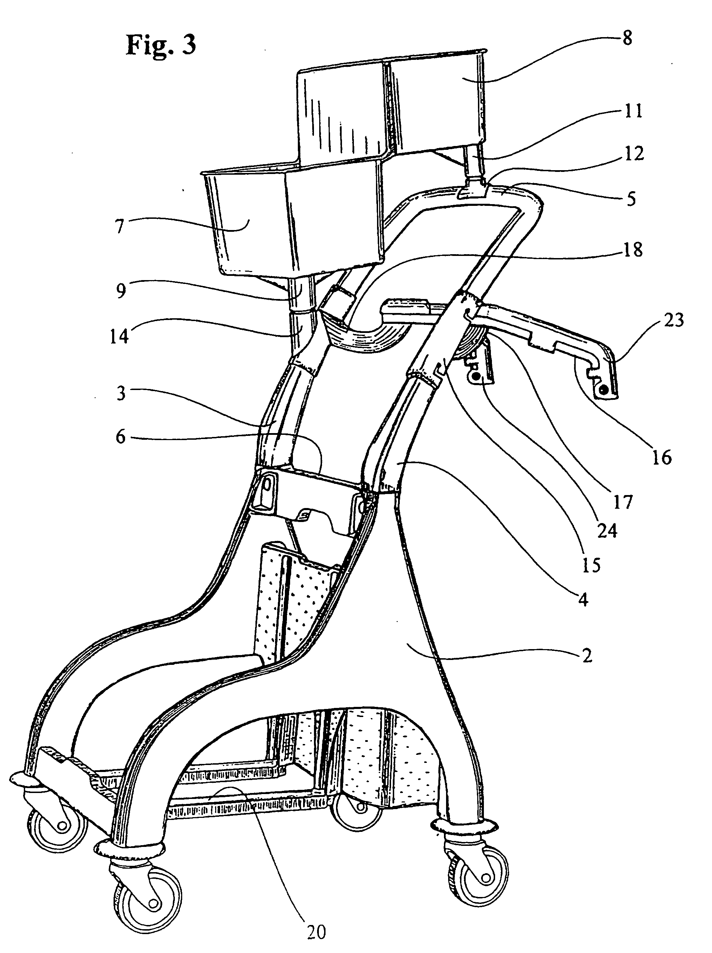

La figure 3 est une vue en perspective correspondant à celle de la figure 1 mais prise de l'avant et du côté gauche.

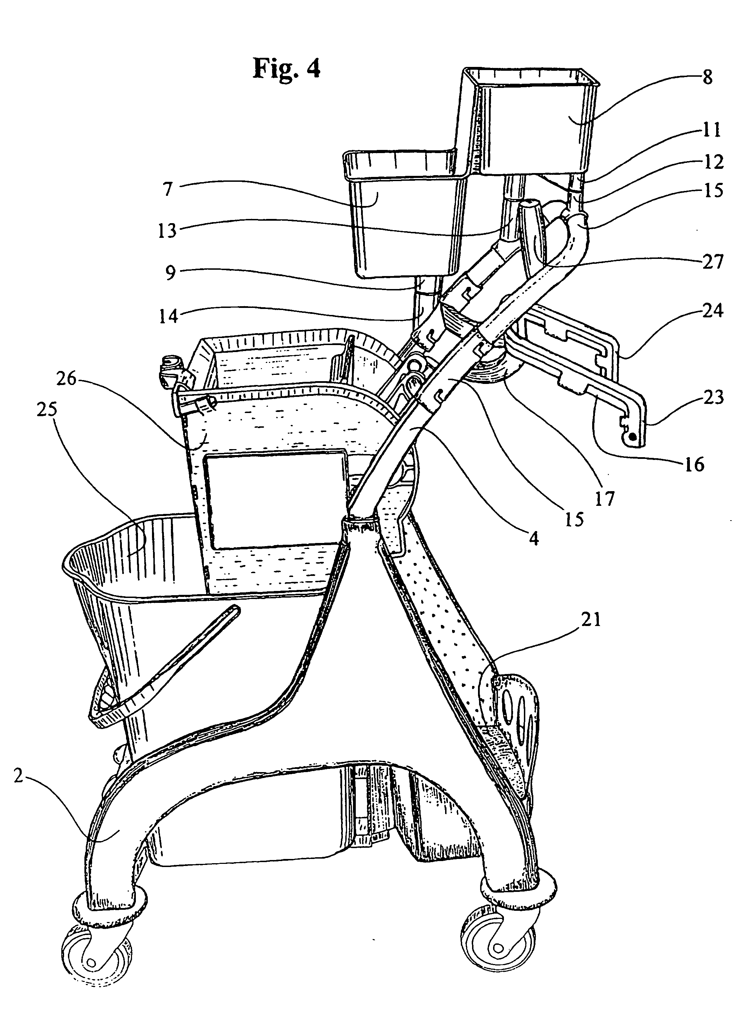

La figure 4 est une vue en perspective correspondant à celle de la figure 3 dans le cas où le chariot sur lequel sont montés les dispositifs suivant la présente invention, sur son manche, porte en outre un seau et un appareil d'essorage.

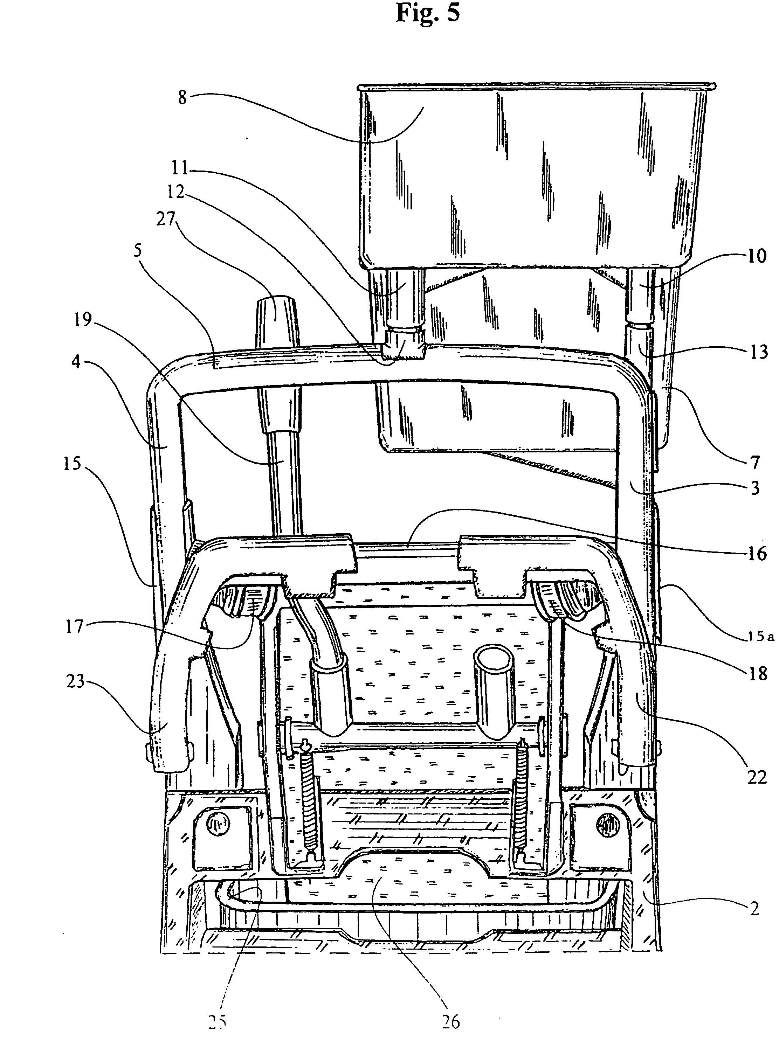

La figure 5 est une vue en perspective partielle, à plus grande échelle, prise de l'arrière d'un chariot portant un seau et pourvu d'un appareil d'essorage et du manche sur lequel sont montés les dispositifs auxiliaires qui l'équipent.

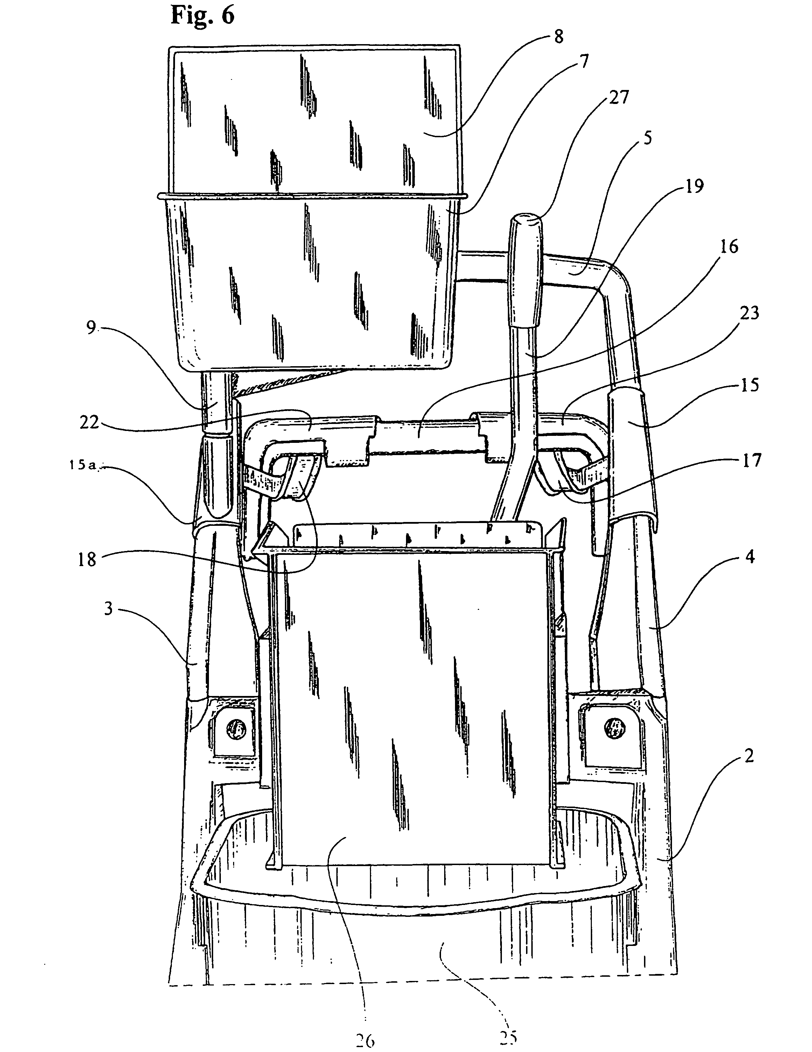

La figure 6 est une vue en perspective partielle, à plus grande échelle, correspondant à celle de la figure 5 mais prise de l'avant du chariot.

Sur les différentes figures du dessin sont représentés le manche de guidage en forme de cadre 1, le chariot 2 dont fait partie le manche 1, les branches inclinées 3 et 4 du manche de guidage en forme de cadre, la traverse supérieure 5 du cadre qui relie les branches inclinées 3 et 4, la traverse 6 du chariot 2 portant l'appareil d'essorage, les bacs 7,8 de la structure monobloc qui est pourvue de jambes 9,10 et 11 s'appliquant sur des supports respectifs 12,13,14 fixés au cadre, le châssis ouvert en forme de C 16 soutenu en porte-à-faux par les bras 17,18 solidaires de supports 15,15a fixés sur les branches inclinées 3,4 du manche de guidage en forme de cadre, le manche ou levier 19 de l'appareil d'essorage 26, la poignée 27 du manche 19 de l'appareil d'essorage, le plan de charge 20 du chariot 2, un compartiment porte-bouteilles 21 du chariot 2, les deux éléments 23,24 à section transversale en forme de U inversé qui sont articulés sur les extrémités du châssis ouvert en forme de C 16 et qui se comportent, à l'égard d'un sac à ordures supporté par le châssis 16, en tant que pinces une fois tournés par-dessus ce châssis 16, et un seau 25 placé sur le plan de charge 20 du chariot 2.

## Revendications

1. Chariot de nettoyage (2) destiné à porter un seau (26) et un appareil d'essorage (26),
le chariot (2) étant pourvu d'un manche de guidage fixe (1) en forme de cadre (3, 4, 5), le manche de guidage (1) comprenant deux branches inclinées (3, 4) de guidage,
le chariot (2) comportant un ou plusieurs dispositifs (7, 8, 16) destinés à être montés sur le manche de guidage (1) en forme de cadre (3, 4, 5),
**caractérisé en ce que** l'un des dispositifs (7, 8, 16) est constitué par une structure (7, 8) située au-dessus du manche de guidage (1) en forme de cadre (3,4,5) et montée sur une seule branche (3) des deux branches inclinées (3, 4) du manche de guidage (1), en étant distante, d'une façon appropriée, de l'autre branche inclinée (4) de manière à laisser libre l'espace nécessaire pour les opérations d'essorage.

2. Chariot de nettoyage (2) suivant la revendication 1, **caractérisé en ce que** la structure du dispositif (7, 8) située au-dessus du manche de guidage en forme de cadre (1) du chariot présente au moins un plan d'appui (9, 10, 11), au moins un plateau, au moins un bac (7, 8) ou au moins un récipient (7, 8).

3. Chariot de nettoyage (2) suivant l'une des revendications précédentes, **caractérisé en ce que** la structure (7, 8) qui est située au-dessus du manche de guidage (1) en forme de cadre, est pourvu de jambes de soutien (9-14) qui en sont solidaires et qui s'accrochent au manche de guidage (1) en forme de cadre du chariot (2).

4. Chariot de nettoyage (2) suivant la revendication 3, **caractérisé en ce que** toutes les jambes (9-14) soutenant la structure (7,8) qui est située au-dessus du manche de guidage (1) en forme de cadre, ou certaines d'entre elles, sont réalisées en deux parties (9, 14; 10, 13; 11, 12) par des accouplements à éléments mâle et femelle.

5. Chariot de nettoyage (2) suivant la revendication 3, **caractérisé en ce que** les jambes (12, 13, 14) de soutien de la structure (7, 8) qui s'accrochent au manche de guidage (1) en forme de cadre, laissent libre une zone de préhension (5) du manche (1) pour le transport du chariot (2).

6. Chariot de nettoyage (2) suivant la revendication 1, **caractérisé en ce que** l'un des dispositifs (7, 8, 16) est constitué d'une structure (16) qui est située en dessous du manche de guidage (1) en forme de cadre et qui est soutenue en porte-à-faux par des bras (17, 18) accrochés aux branches inclinées (3, 4) du manche de guidage (1) en forme de cadre et qui la maintiennent à une distance appropriée des branches inclinées (3, 4).

7. Chariot de nettoyage (2) suivant la revendication 6, **caractérisé en ce que** la structure (16) qui est maintenue en porte-à-faux en dessous du manche de guidage (1) en forme de cadre est constituée par un châssis ouvert (16) sensiblement en forme de C adapté plus particulièrement au soutien de petits sacs à ordures.

8. Chariot de nettoyage (2) suivant la revendication 7, **caractérisé en ce que** le châssis ouvert (16) en forme de C se trouve dans une position sous-horizontale avec une inclinaison vers l'extérieur.

9. Chariot de nettoyage (2) suivant la revendication 7, **caractérisé en ce que** la châssis ouvert (16) en forme de C présente, à ses extrémités libres, deux petits prolongements inclinés (23, 24) qui s'étendent vers le bas.

10. Chariot de nettoyage (2) suivant la revendication 9, **caractérisé en ce que** sur les extrémités inférieures des prolongement inclinés (23, 24) du châssis ouvert (16) en forme de C sont articulés deux éléments (23, 24) ayant une section transversale en forme de U inversé, pouvant venir se superposer sur les deux moitiés du châssis ouvert (16) en forme de C, comme des coquilles, pour assurer un serrage en jouant le rôle de pinces.

11. Chariot de nettoyage (2) suivant l'une quelconque des revendications précédentes, **caractérisé en ce que** les parties extrêmes (12, 13, 14, 15) des éléments d'accrochage des dispositifs (7, 8, 16) montés sur le manche de guidage (1) en forme de cadre du chariot (2) sont accouplées au moyen de tétons à tête élargies présentes sur l'une (3, 4, 5) des deux parties à accoupler et de fentes correspondantes en forme de L présentes sur l'autre partie à accoupler (7, 8, 16).

## Patentansprüche

1. Reinigungswagen (2) zum Tragen eines Eimers (26) und einer Presse (26),
wobei der Wagen (2) Mit einem als Rahmen (3, 4, 5) ausgebildeten feststehenden Führungsbügel (1) versehen ist, wobei der Führungsbügel (1) zwei geneigte Führungsschenkel (3, 4) umfasst,
wobei der Wagen (2) eine oder mehrere Vorrichtungen (7, 8, 16) zum Anbringen an dem als Rahmen (3, 4, 5) ausgebildeten Führungsbügel (1) aufweist,
**dadurch gekennzeichnet, dass** eine der Vorrichtungen (7, 8, 16) aus einer Struktur (7, 8) besteht, die sich oberhalb des als Rahmen (3, 4, 5) ausgebildeten Führungsbügels (1) befindet und an nur einem Schenkel (3) der beiden geneigten Schenkel (3, 4) des Führungsbügels (1) angebracht ist und dabei in geeigneter Weise vom anderen geneigten Schenkel (4) derart beabstandet ist, dass ein für das Auswringen benötigter Raum freigelassen wird.

2. Reinigungswagen (2) nach Anspruch 1, **dadurch gekennzeichnet, dass** die oberhalb des als Rahmen ausgebildeten Führungsbügels (1) des Wagens befindliche Struktur der Vorrichtung (7, 8) mindestens eine Auflagefläche (9, 10, 11), mindestens eine Platte, mindestens eine Schale (7, 8) oder mindestens einen Behälter (7, 8) aufweist.

3. Reinigungswagen (2) nach einem der vorangegangenen Ansprüche, **dadurch gekennzeichnet, dass** die oberhalb des als Rahmen ausgebildeten Führungsbügels (1) befindliche Struktur (7, 8) mit einstückig mit dieser ausgebildeten Stützstangen (9-14) versehen ist, welche in den als Rahmen ausgebildeten Führungsbügel (1) des Wagens (2) einhängbar sind.

4. Reinigungswagen (2) nach Anspruch 3, **dadurch gekennzeichnet, dass** alle oder einige der Stangen (9-14), die die oberhalb des als Rahmen ausgebildeten Führungsbügels (1) befindliche Struktur (7, 8) stützen, aus zwei Teilen (9, 14; 10, 13; 11, 12) bestehen, die über männliche und weibliche Elemente aufweisende Kupplungen miteinander verbunden sind.

5. Reinigungswagen (2) nach Anspruch 3, **dadurch gekennzeichnet, dass** die Stützstangen (12, 13, 14) der Struktur (7, 8), die in den als Rahmen ausgebildeten Führungsbügel (1) einhängbar sind, eine Greifzone (5) zum Greifen des Bügels (1) beim Transport des Wagens (2) freilassen.

6. Reinigungswagen (2) nach Anspruch 1, **dadurch gekennzeichnet, dass** eine der Vorrichtungen (7, 8, 16) aus einer Struktur (16) besteht, die sich unterhalb des als Rahmen ausgebildeten Führungsbügels (1) befindet und die durch Arme (17, 18), welche an den geneigten Schenkeln (3, 4) des als Rahmen ausgebildeten Führungsbügels (1) eingehängt sind und diese Struktur in angemessenem Abstand zu den geneigten Schenkeln (3, 4) halten, freitragend gehalten wird.

7. Reinigungswagen (2) nach Anspruch 6, **dadurch gekennzeichnet, dass** die unterhalb des als Rahmen ausgebildeten Führungsbügels (1) freitragend gehaltene Struktur (16) aus einem im Wesentlichen C-förmigen offenen Gestell (16) besteht, das insbesondere als Halterung für kleine Müllsäcke geeignet ist.

8. Reinigungswagen (2) nach Anspruch 7, **dadurch gekennzeichnet, dass** das C-förmige offene Gestell (16) sich in einer unterhalb der Horizontalen nach außen geneigten Position befindet.

9. Reinigungswagen (2) nach Anspruch 7, **dadurch gekennzeichnet, dass** das C-förmige offene Gestell (16) an seinen freien Enden zwei kleine nach unten sich erstreckende geneigte Fortsätze (23, 24) aufweist.

10. Reinigungswagen (2) nach Anspruch 9, **dadurch gekennzeichnet, dass** an den unteren Enden der geneigten Fortsätze (23, 24) des C-förmigen offenen Gestells (16) zwei Elemente (23, 24) mit einem Querschnitt in Form eines umgekehrten U angelenkt sind, welche über die beiden Hälften des C-förmigen offenen Gestells (16) wie Schalen geklappt werden, um ein zangenartiges Spannen zu gewährleisten.

11. Reinigungswagen (2) nach einem der vorangegangenen Ansprüche, **dadurch gekennzeichnet, dass** die Endteile (12, 13, 14, 15) der Einhängelemente der Vorrichtungen (7, 8, 16), die an dem als Rahmen ausgebildeten Führungsbügel (1) des Wagens (2) angebracht sind, anhand von an einem (3, 4, 5) der beiden zu verbindenden Teile vorgesehenen Stiften mit breiteren Köpfen und von entsprechenden am anderen zu verbindenden Teil (7, 8, 16) vorgesehenen L-förmigen Schlitzen miteinander verbunden sind.

## Claims

1. A cleaning cart (2) for carrying a bucket (26) and a wringer (26),
said cart (2) being provided with a fixed guide handle (1) in the shape of a frame (3, 4, 5), said guide handle (1) including two inclined guide legs (3, 4),
said cart (2) comprising one or a plurality of devices (7, 8, 16) adapted for mounting to the guide handle (1) in the shape of a frame (3, 4, 5),
**characterized in that** one of said devices (7, 8, 16) consists of a structure (7, 8) located above the guide handle (1) in the shape of a frame (3, 4, 5) and mounted to but one leg (3) of the two inclined legs (3, 4) of the guide handle (1) while being appropriately spaced from the other inclined leg (4) so as to leave space for wringing.

2. The cleaning cart (2) as set forth in claim 1, **characterized in that** the structure of the device (7, 8), which is located above the frame-shaped guide handle (1) of the cart, has at least one contact surface (9, 10, 11), at least one tray, at least one pan (7, 8) or at least one container (7, 8).

3. The cleaning cart (2) as set forth in any of the afore-mentioned claims, **characterized in that** the structure (7, 8), which is located above the frame-shaped guide handle (1), is provided with supporting struts (9-14) that are configured integral therewith and are adapted to be hooked to the frame-shaped guide handle (1) of the cart (2).

4. The cleaning cart (2) as set forth in claim 3, **characterized in that** all or some of the struts (9-14) supporting the structure (7, 8) that is located above the frame-shaped guide handle (1) are realized in two parts (9, 14; 10, 13; 11, 12) connected by couplings having male and female elements.

5. The cleaning cart (2) as set forth in claim 3, **characterized in that** the struts (12, 13, 14) for supporting the structure (7, 8), which are adapted to be hooked to the frame-shaped guide handle (1), leave a gripping zone (5) on the handle (1) for transporting said cart (2).

6. The cleaning cart (2) as set forth in claim 1, **characterized in that** one of the devices (7, 8, 16) consists of a structure (16) that is located beneath the frame-shaped guide handle (1) and is cantilevered by arms (17, 18) that are hooked to the inclined legs (3, 4) of the frame-shaped guide handle (1) and hold said structure suitably spaced from the inclined legs (3, 4).

7. The cleaning cart (2) as set forth in claim 6, **characterized in that** the structure (16), which is cantilevered below the frame-shaped guide handle (1), is formed by a substantially C-shaped open supporting frame (16) that is more specifically adapted to support small refuse bags.

8. The cleaning cart (2) as set forth in claim 7, **characterized in that** the C-shaped open supporting frame (16) is in a position below a horizontal plane and is inclined outwards.

9. The cleaning cart (2) as set forth in claim 7, **characterized in that**, at its free ends, the C-shaped open supporting frame (16) has two small inclined extensions (23, 24) extending downwards.

10. The cleaning cart (2) as set forth in claim 9, **characterized in that** two elements (23, 24) having an inverted U cross sectional shape are hinged to the lower ends of the inclined extensions (23, 24) of the C-shaped open supporting frame (16), said two elements being capable of being superposed like shells on the two halves of the C-shaped open supporting frame (16), thus ensuring clamping by assuming the function of tongs.

11. The cleaning cart (2) as set forth in any of the afore-mentioned claims, **characterized in that** the end portions (12, 13, 14, 15) of the elements for hooking up the devices (7, 8, 16) mounted to the frame-shaped guide handle (1) of the cart(2) are coupled by means of pins with widened heads provided on one (3, 4, 5) of the two portions to be coupled and of corresponding L-shaped slots provided on the other portion to be coupled (7, 8, 16).
